# EUROPÄISCHE PATENTSCHRIFT

(11) **EP 0 321 751 B1**
(45) Veröffentlichungstag und Bekanntmachung des Hinweises auf die Patenterteilung: **07.01.1993**
(21) Anmeldenummer: 88120000.0
(22) Anmeldetag: 30.11.1988
(51) Int. Cl.: B23H 1/10

(54) **Elektroerosionsmaschine mit einer Vorrichtung zum Filtern der Bearbeitungsflüssigkeit**
Electroerosion machine comprising a filtration device for the working liquide
Machine d'électro-érosion avec un dispositif de filtrage du liquide d'usinage

(30) Priorität: 22.12.1987 DE 3743622
(43) Veröffentlichungstag der Anmeldung: 28.06.1989
(73) Patentinhaber: AG für industrielle Elektronik AGIE Losone bei Locarno, CH-6616 Losone/Locarno (CH)
(72) Erfinder: Levy, Gideon, Dr., CH-6616 Losone (CH); Budin, Josef, CH-6648 Minusio (CH); Mörgeli, Benjamin, Dr., CH-8454 Rickenbach (CH)
(74) Vertreter: von Bülow, Tam, Dr.

(56) Entgegenhaltungen:
- EP-A- 0 171 196
- DE-A- 3 727 275
- FOOD TECHNOLOGY vol. 38, no. 12, Dezember 1984, Chicago,Illinois,USA Seite 77 - 87; Paulson,Wilson,Spatz: "CROSSFLOW MEMBRANE TECHNOLOGY AND ITS APPLICATIONS"
- PATENT ABSTRACTS OF JAPAN vol. 11, no. 205 (M-603) 2652 03 Juli 1987, & JP-A-62 24917 (INOUE JAPAX)

## Beschreibung

Die vorliegende Erfindung betriff eine Elektroerosionsmaschine mit einer Vorrichtung zum Filtern der Bearbeitungsflüssigkeit einer nach dem Oberbegriff des Patentanspruches 1.

Elektroerosionsmaschinen haben einen mit einer Bearbeitungsflüssigkeit gefüllten Arbeitsbehälter, in dem ein mittels Elektroerosion zu bearbeitendes Werkstück eingetaucht ist. Die Bearbeitungsflüssigkeit besteht bei sog. Drahtschneidemaschinen aus reinem Wasser oder einer Flüssigkeit, deren Hauptbestandteil Wasser ist, während sie bei den Senkmaschinen aus Kohlenwasserstoffen besteht. Im Laufe der Erosionsbearbeitung des Werkstückes vermindert sich die Reinheit der Bearbeitungsflüssigkeit, wodurch sich auch deren elektrische Leitfähigkeit ändert. Um eine bestimmte Qualität der Erosionsbearbeitung aufrechtzuerhalten, ist es nötig, die Bearbeitungsflüssigkeit zu reinigen, um deren elektrische Eigenschaften und deren Reinheit in vorbestimmten Bereichen zu halten.

In jüngerer Zeit wurden bereits erste Versuche unternommen, bei der Filtervorrichtung für das Filtern der Bearbeitungsflüssigkeit auch Membranfilter einzusetzen. So zeigt beispielsweise die JP-Os 62-24 917 eine Filtervorrichtung mit einem Membranfilter für eine Elektorerosionsmaschine. Die Filtervorrichtung umfaßt einen Behälter für die Bearbeitungsflüssigkeit, der durch eine aus Cellophan bestehende Mambran in zwei Bereiche unterteilt ist. Ein erster Bereich steht über einer Pumpe, der ein konventioneller Filter nachgeschaltet ist, mit dem Arbeitsbehälter der Elektroerosionsmaschine in Verbindung, der mittels einer weiteren Pumpe wieder in diesen ersten Bereich des Behälters entleerbar ist. Der zweite Bereich des Behälters ist über eine weitere Pumpe an einen Ionentauscher angeschlossen. Die Ionenkonzentration in dem zweiten Behälterbereeich liegt um Größenordnungen unter der Ionenkonzentration im ersten Behälterbereich, so daß der Ionentauscher mit einer für sein Betriebsverhalten günstigen niedrigen Ionendichte betrieben werden kann. Bei dieser bekannten Filtervorrichtung dient die Membranfilterwand also lediglich zur einstellbaren Reduktion der Ionendichte für einen Kreislauf eines Ionentauschers.

Im Bereich der Nahrungsmittelindustrie ist es bekannt ( aus der Zeitschrift "FOOD TECHNOLOGIE vol. 38, no. 12, Dezember 1984, Chicago, Illinois, USA, s. 77-87), Querstrom-Membranfilter zum Filtern von Flüssigkeitsströmen zu verwenden.

Aus der EP-A 0 171 196 ist eine Vorrichtung nach dem Oberbegriff des Anspruches 1 bekannt. Verbrauchte Arbeitsflüssigkeit wird in einen Schmutztank eingebracht. Aus diesem Schmutztank wird die durch Erosionsteilchen verschmutzte Bearbeitungsflüssigkeit mittels einer Pumpe durch ein Filter geleitet, aus dem diese Flüssigkeit in einen Saubertank fließt. Dem Saubertank ist zur weiteren Aufbereitung der gefilterten Bearbeitungsflüssigkeit eine Ionentauschersäule nachgeschaltet.

Ferner ist bekannt, zum Filtern der Bearbeitungsflüssigkeit von Elektroerosionsmaschinen konventionelle Filter mit einer gegenüber Membranfiltern großen Porenabmessung einzusetzen.

Gegenüber diesem Stand der Technik liegt der vorliegenden Erfindung die Aufgabe zugrunde, eine Vorrichtung zum Filtern der Bearbeitungsflüssigkeit einer Elektroerosionsmaschine anzugeben, mit der eine hohe Reinheit der gefilterten Bearbeitungsflüssigkeit erzielt wird, ohne daß es zu einem Zusetzen des Filters kommt.

Diese Aufgabe wird bei der Vorrichtung nach dem Oberbegriff des Patentanspruchs 1 durch die im kennzeichnenden Teil des Patentanspruchs 1 angegebenen Merkmale gelöst.

Überraschenderweise ermöglicht die in Anspruch 1 definierte Vorrichtung den Einsatz von Membranfiltern zum Reinigen der Bearbeitungsflüssigkeit, ohne daß es zu einem Zusetzen der Membranfilterwand durch die Verunreinigungen der Bearbeitungsflüssigkeit kommt. Die in Anspruch 1 definierte Vorrichtung ermöglicht es somit entgegen der Erwartung der Fachwelt, einen Membranfilter zum direkten Reinigen der Bearbeitungsflüssigkeit einzusetzen, ohne daß es zu dem erwarteten Problemen durch Verschmutzung der Membran kommt. Das durch das Membranfilter gereinigte Permeat zeigt eine hervorragende Reinheit und somit auch die benötigten elektrischen Eigenschaften für eine hochqualitative Erosionsbearbeitung.

Die in Anspruch 2 angegebene Ausgestaltung des Filters ermöglicht nicht nur eine einfache Herstellbarkeit des Filters bei tangentialer Führung der Bearbeitungsflüssigkeit, sondern erweist sich auch als besonders geeignet, um ein Ablagern von Schmutz im Filter zu verhindern.

Besonders geeignete Durchflussmengen sind Gegenstand der Ansprüche 3 und 4, wobei darauf hinzuweisen ist, daß die optimalen Werte in Richtung einer großen Verhältniszahl (maximal 1) von Permeat zu Konzentrat liegen.

Sehr gute Filterergebnisse bei niedriger Verstopfungsneigung des Filters konnten mit der in Anspruch 5 angegebenen Porengröße der Membranfilterwandung erzielt werden.

Die Anordnung der verschiedenen Behälter der erfindungsgemäßen Vorrichtung sind Gegenstand der Ansprüche 6 ,7. Ein besonders leistungsfähiges Membranfilter erhält man mit den Hohlfasern des Anspruches 9.

Mit den Merkmalen der Ansprüche 10 bis 13 werden eventuell doch noch sich ablagernde Partikel, die zu einer Verstopfungsneigung führen könnten, abgeführt.

Schließlich sei noch erläutert, daß - wie in der Filtertechnik üblich - die verschmutzte, zu reinigende Flüssigkeit als "Konzentrat" bezeichnet wird, während die gereinigte Flüssigkeit "Permeat" genannt wird.

Nachfolgend wird unter Bezugnahme auf die beiliegenden Zeichnungen eine bevorzugte Ausführungsform der vorliegenden Erfindung näher erläutert. Es zeigen:
- Fig. 1: Ein Blockdiagramm der Gesamtanordnung der erfindungsgemäßen Vorrichtung; und
- Fig. 2: ein das Filter betreffendes Detail der Vorrichtung gemäß Fig. 1.

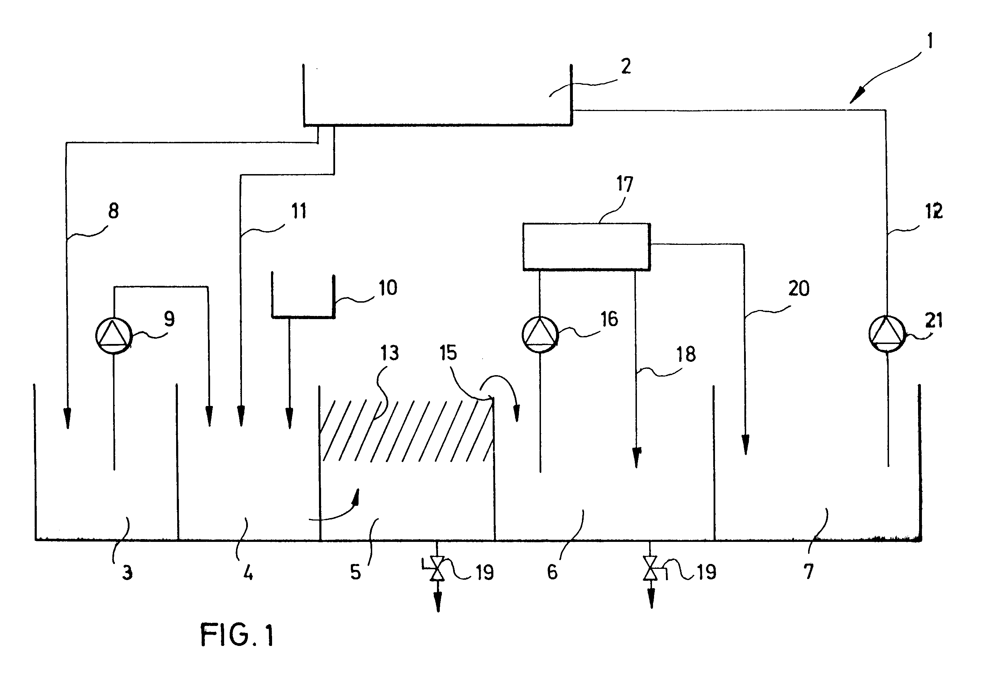

Fig. 1 zeigt eine Vorrichtung 1 gemäß der vorliegenden Erfindung. Die Vorrichtung 1 ist an einen Arbeitsbehälter 2 einer (nicht dargestellten) Erosionsmaschine angeschlossen.

Die Vorrichtung umfaßt einen Auffangbehälter 3, einen Flockungsbehälter 4, einen Sedimentationsbehälter 5, einen Zwischenbehälter 6 und einen Tank 7. Der Inhalt des Arbeitsbehälters 2 kann dem Auffangbehälter 3 über eine Entleerungsleitung 8 zugeführt werden. Der Inhalt des Auffangbehälters 3 kann mittels einer ersten Pumpe 9 in den Flockungsbehälter 4 übergeführt werden, dem über eine (nicht gezeigte) Dosierpumpe ein Flockungsmittelzusatz aus einem Flockungsmittelzusatzbehälter 10 zuführbar ist.

Ferner kann der Inhalt des Arbeitsbehälters über eine Absaugleitung 11 direkt in den Flockungsbehälter 4 gebracht werden. Der Flockungsbehälter 4 ist mit dem Sedimentationsbehälter 5 durch einen nahe des Bodens der Behälter 4, 5 angeordneten Durchlaß 12 verbunden.

Im Sedimentationsbehälter 5 sind eine Mehrzahl von gegenüber der Vertikalen geringfügig geneigten Sedimentationsleitflächen 13 angeordnet. Der Bodensatz des Sedimentationsbehälters 5 kann über ein erstes Entsorgungsventil beseitigt werden. Ein Überlauf 15 des Sedimentationsbehälters 5 dient zum Überführen der vorgereinigten Bearbeitungflüssigkeit zu dem Zwischenbehälter 6.

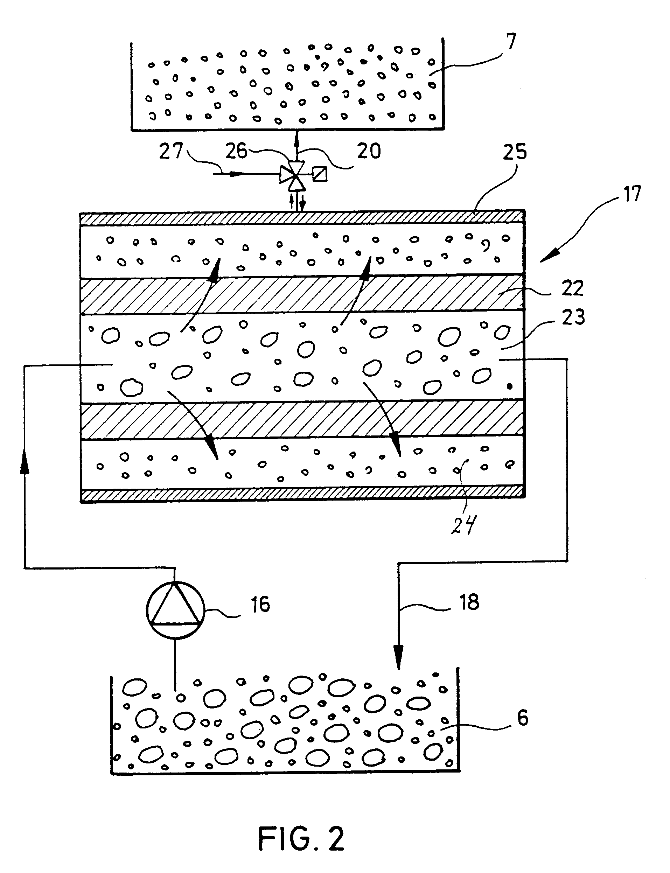

Das vorgereinigte Konzentrat wird dem Zwischenbehälter 6 über eine zweite Pumpe 16 entnommen, dem Mebranfilter 17, das nachfolgend unter Bezugnahme auf Fig. 2 noch näher erläutert wird, zugeführt und im Kreislauf über die Rückflußleitung wiederum dem Zwischenbehälter 6 zugeführt.

Bei einer zu hohen Akkumulation von Verschmutzungen im Zwischenbehälter 6 ist dieser mittels eines zweiten Entsorgungsventiles entleerbar, und zwar in ein (nicht dargestelltes) Absetzbecken, welches nach Bedarf entsorgt werden kann.

Obwohl in Fig. 1 nicht dargestellt, kann das Konzentrat aus dem Flockungsbehälter 4 auch direkt, also unter Umgehung des Segimentationsbehälters 5 und des Zwischenbehälters 6 dem Membranfilter 17 zugeleitet werden. Hierzu wird man auf der Saugseite der Pumpe 16 eine weitere Saugleitung zum Flockungsbehälter 4 führen und in die dann verhandenen zwei Saugleitungen der Pumpe 16 ein Umschaltventil einfügen.

Das Permeat wird dem Tank 7 über eine Zuflußleitung 20 zugeführt und von dort über eine dritte Pumpe 21 und eine Spülleitung 12 zum Arbeitsbehälter 2 geleitet.

Nachfolgend wird auf Fig. 2 Bezug genommen, in der Details des in Fig. 1 dargestellten Membranfilters 17 sowie des zugehörigen Flüssigkeitskreislaufes gezeigt sind.

Wie bereits in Fig. 1 zu sehen ist, wird dem Zwischenbehälter 6 das Konzentrat mittels der zweiten Pumpe 16 entnommen, dem Membranfilter 17 zugeführt und dem Kreislauf über die Rückflußleitung 18 wiederum zugeführt. Das Permeat wird dem Membranfilter 17 über die Zuflußleitung 20 entnommen und dem Tank 7 zugeführt.

Wie in Fig. 2 zu erkennen ist, hat der Membranfilter 17 bei dieser bevorzugten Ausführungsform eine rohrförmige Membran 22, die einen Bereich 23 des Konzentrats von einem Bereich 24 des Permeates trennt.

Der Filter ist von einer zylindrischen Wand 25 umschlossen.

In der zeichnerischen Darstellung ist ein einziges Membranfilterelement 17 gezeigt. In einer praktisch realisierten, bevorzugten Ausführungsform sind jedoch eine Mehrzahl von identischen Filterelementen strömungsmäßig in Parallelschaltung vorgesehen. Die Durchflußrate des Konzentrates hängt von der Dimensionierung des Filters und den Anforderungen an die Reinheit des Permeates ab. Im Prinzip wird man sich bemühen, durch Einstellung der verschiedenen Parameter das Verhältnis zwischen Permeatmenge und Konzentratmenge möglichst nahe an 1 zu bringen. Ein Verhältnis von 0,5 wird derzeit aber schon als recht gut angesehen.

Ein Membranfilterelement wird auf der Seite des Konzentrates mit einem Druck von z.B. 2 bis 3 bar beaufschlagt.

Bevorzugt wird ein Filter, dessen Membranwandung aus Hohlfasern besteht, die aus Polypropylen sind. Die Hohlfasern haben einen Durchmesser von etwa 1,5 mm und eine Porengröße von 0,2 µm.

Zwischen dem Tank 7 und dem Membranfilter 17 liegt ein elektrisch betätigbares Ventil 26, mit dem das Membranfilter 17 für eine Rückspülung vom Tank 7 absperrbar und mit einer Zuführleitung 27 für ein Luft-Wasser- Gemisch verbindbar ist.

In bestimmten Abständen wird das Membranfilter 17 durch Rückspülen gereinigt. Hierzu ist theoretisch möglich, in fest vorgegebenen Zeitabständen ein Rückspülen durchzuführen. Günstiger ist es allerdings, dieses Rückspülen druck- oder durchflußabhängig durchzuführen. Sobald der Druck auf der Konzentratseite einen bestimmten Wert überschreitet, ist dies ein Maß für eine vorgegebene Verstopfung des Filters, was durch einen Drucksensor erfaßt werden kann. Auch könnte man nach einer vorgegebenen Permeatmenge, die mittels eines Durchflußmessers erfaßt werden kann, eine Rückspülung einleiten. Zum Rückspülen wird das Ventil 26 umgeschaltet, worauf das Membranfilter 17 mit einem Luft-Wasser- Gemisch, dem eventuell noch Reinigungs-Chemiekalien zugesetzt sind, beaufschlagt wird. Während eines Rückspülzyklus, der beispielsweise zwei Minuten lang sein kann, wird das Ventil 26 vorzugsweise stochastisch betätigt, wobei die einzelnen Betätigungsfasen recht kurz (bis zu einigen Sekunden) sein können. Durch dieses unregelmäßige, praktisch impulsweise auftretende Rückspülen wird der beste Reinigungserfolg erzielt. Während des Rückspülens wird natürlich die zweite Pumpe 16 abgeschaltet.

## Patentansprüche

1. Elektroerosionsmaschine mit einer Vorrichtung zum Filtern der Bearbeitungsflüssigkeit, die
eine Pumpe (16) aufweist, deren Ansaugseite mit der zu reinigenden Bearbeitungsflüssigkeit strömungsmäßig verbunden ist und auf der Auslaßseite mit der Zuflußseite eines eine Membran aufweisenden Filters (17) verbunden ist,
dadurch gekennzeichnet,
daß das Filter (17) als ein Querstrommembranfilter ausgebildet ist, durch das die zu reinigende Bearbeitungsflüssigkeit der Elektroerosionsmaschine tangential zur Membranfilterwand (22) führbar ist.

2. Elektroerosionsmaschine nach Anspruch 1, dadurch gekennzeichnet,
daß das Filter als Rohrfilter (17) ausgeführt ist.

3. Elektroerosionsmaschine nach Anspruch 1 oder 2, dadurch gekennzeichnet,
daß die Pumpe (16) und der Filter (17) derart ausgelegt sind, daß die im Kreislauf geführte Konzentratmenge pro Zeiteinheit ca. 1,5 mal bis zehnmal größer ist als die vom Filter (17) abgeleitete Permeatmenge pro Zeiteinheit.

4. Elektroerosionsmaschine nach Anspruch 3, dadurch gekennzeichnet,
daß die Pumpe (16) und der Filter (17) derart ausgelegt sind,
daß die im Kreislauf geführte Kozentratmenge pro Zeiteinheit 500 bis 1000 Liter pro Minute und
daß die vom Filter (17) abgeleitete Permeatmenge pro Zeiteinheit 20 bis 60 Liter pro Minute beträgt.

5. Elektroerosionsmaschine nach Anspruch 4, dadurch gekennzeichnet,
daß das Filter (17) mehrere Filterelemente in strömungsmäßiger Parallelschaltung aufweist, wobei die Pumpe (16) und die Filterelemente des Filters (17) derart ausgelegt sind,
daß die jedem Filterelement zugeführte Konzentratmenge pro Zeiteinheit zwischen fünfundzwanzig und fünfzig Liter pro Minute und die von jedem Filterelement abgeleitete Permeatmenge pro Zeiteinheit 2,5 bis fünfundzwanzig Liter pro Minute beträgt.

6. Elektroerosionsmaschine nach einem der Ansprüche 1 bis 5, dadurch gekennzeichnet,
daß die Filterwand (22) eine Porengröße von 0,01 bis 2 um, vorzugsweise von 0,2 um aufweist.

7. Elektroerosionsmaschine nach einem der Ansprüche 1 bis 6, dadurch gekennzeichnet,
daß ein Auffangbehälter (3) vorgesehen ist, in den die verschmutzte Arbeitsflüssigkeit des Arbeitsbehälters (2) der Elektroerosionsmaschine entleerbar ist,
daß ein Flockungsbehälter (4) und/oder ein Sedimentationsbehälter (5) vorgesehen sind, in welche wahlweise der Inhalt des Auffangbehälters (3) zuführbar ist,
daß das Konzentrat dem Zwischenbehälter (6) von der Pumpe (16) entnommen, durch den Filter (17) geführt und im Kreislauf zum Zwischenbehälter rückgeführt wird, und
daß ein Tank (7) vorgesehen ist, dem das Permeat von dem Filter (17) zugeführt wird, und daß der Arbeitsbehälter (2) von dem Tank (7) mit dem Permeat versorgt wird.

8. Elektroerosionsmaschine nach Anspruch 7, dadurch gekennzeichnet,
daß der Flockungsbehälter (4) zwischen dem Auffangbehälter (3) und dem Sedimentationsbehälter (5) angeordnet ist, wobei dort dem Konzentrat ein Flockungsmittel zusetzbar ist.

9. Elektroerosionsmaschine nach einem der Ansprüche 1 bis 8, dadurch gekennzeichnet,
daß die Filterwand aus Polypropylen-Hohlfasern besteht, die einen Durchmesser von etwa 1 - 2 mm und eine Porengröße von 0,2 um aufweisen.

10. Elektroerosionsmaschine nach einem der Ansprüche 1 bis 9, dadurch gekennzeichnet,
daß das Filter derart ausgelegt ist, daß es druck- oder durchflußabhängig periodisch rückspülbar ist und während jeder Rückspülphase in unregelmäßigen Zeitabständen stochastisch mit einem Luft-Wasser-Gemisch beaufschlagbar ist.

11. Elektroerosionsmaschine nach Anspruch 10, dadurch gekennzeichnet,
daß dem Luft-Wasser-Gemisch für die Rückspülung zusätzlich Chemikalien zumischbar sind.

12. Elektroerosionsmaschine nach Anspruch 10 oder 11, dadurch gekennzeichnet,
daß der Zwischenbehälter (6) periodisch in ein entsorgbares Absetzbecken entleerbar ist.

## Claims

1. An electroerosion machine comprising a device for filtering the treatment fluid which has a pump (16), the intake side of which is connected with regard to flow to the treatment fluid which is to be purified and which is connected on the outlet side to the feed side of a filter (17) having a membrane,
characterised in that the filter (17) is designed as a cross-flow membrane filter through which the treatment fluid of the electroerosion machine which is to be purified may be passed tangentially to the membrane filter wall (22).

2. An electroerosion machine according to claim 1, characterised in that the filter is constructed as a tubular filter (17).

3. An electroerosion machine according to claim 1 or 2, characterised in that the pump (16) and the filter (17) are designed such that the quantity of concentrate conveyed in the circulation per unit of time is about 1.5 to ten times greater than the quantity of permeate conveyed from the filter (17) per unit of time.

4. An electroerosion machine according to claim 3, characterised in that the pump (16) and the filter (17) are designed such that the quantity of concentrate conveyed in the circulation per unit of time is 500 to 1000 litres per minute, and in that the quantity of permeate conveyed from the filter (17) per unit of time is 20 to 60 litres per minute.

5. An electroerosion machine according to claim 4, characterised in that the filter (17) has several filter elements in parallel connection, with regard to flow, the pump (16) and the filter elements of the filter (17) being designed such that the quantity of concentrate supplied to each filter element per unit of time is between twenty five and fifty litres per minute, and the quantity of permeate conveyed from each filter element per unit of time is 2.5 to twenty five litres per minute.

6. An electroerosion machine according to one of claims 1 to 5, characterised in that the filter wall (22) has a pore size of 0.01 to 2 um, preferably 0.2 um.

7. An electroerosion machine according to one of claims 1 to 6, characterised in that a collecting vessel (3) is provided into which the contaminated working fluid of the working vessel (2) of the electroerosion machine may be emptied, in that a flocculation vessel (4) and/or a sedimentation vessel (5) are provided into which the contents of the collecting vessel (3) may optionally be conveyed, in that the concentrate is removed from the intermediate vessel (6) by the pump (16), passed through the filter (17) and returned in the circulation to the intermediate vessel, and in that a tank (7) is provided to which the permeate from the filter (17) is conveyed, and in that the working vessel (2) is supplied with the permeate from the tank (7).

8. An electroerosion machine according to claim 7, characterised in that the flocculation vessel (4) is disposed between the collecting vessel (3) and the sedimentation vessel (5), in which vessel a flocculator can be added to the concentrate.

9. An electroerosion machine according to one of claims 1 to 8, characterised in that the filter wall is made of hollow polypropylene fibres which have a diameter of about 1 - 2 mm and a pore size of 0.2 um.

10. An electroerosion machine according to one of claims 1 to 9, characterised in that the filter is designed such that it can periodically be reflushed in dependence on the pressure or through-flow and during each reflushing phase can be acted upon stochastically at irregular intervals with an air-water mixture.

11. An electroerosion machine according to claim 10, characterised in that chemicals can additionally be added to the air-water mixture for the reflushing procedure.

12. An electroerosion machine according to claim 10 or 11, characterised in that the intermediate vessel (6) can periodically be emptied into a settling tank from which waste disposal can take place.

## Revendications

1. Machine d'électro-érosion comportant un dispositif pour le filtrage du liquide d'usinage, comprenant une pompe (16) dont le côté aspiration est relié pour circulation au liquide d'usinage à nettoyer et dont le côté évacuation est relié au côté alimentation d'un filtre (17) comportant une membrane, caractérisé en ce que le filtre (17) est conformé comme un filtre à membrane à circulation transversale à travers lequel le liquide d'usinage à nettoyer de la machine d'électro-érosion est amené tangentiellement à la paroi du filtre à membrane (22).

2. Machine d'électro-érosion selon la revendication 1, caractérisée en ce que le filtre est configuré comme un filtre tubulaire (17).

3. Machine d'électro-érosion selon la revendication 1 ou 2, caractérisée en ce que la pompe (16) et le filtre (17) sont agencés de manière telle que la quantité de concentrat mise en circulation par unité de temps est environ de 1,5 à 10 fois plus grande que la quantité de perméat sortant du filtre (17) par unité de temps.

4. Machine d'électro-érosion selon la revendication 3, caractérisée en ce que la pompe (16) et le filtre (17) sont agencés de telle manière que la quantité de concentrat mise en circulation par unité de temps est de 500 ml/minute et en ce que la quantité de perméat sortant du filtre (17) s'élève par unité de temps à 20 à 60 litres/minute.

5. Machine d'électro-érosion selon la revendication 4, caractérisée en ce que le filtre (17) comporte plusieurs éléments filtrants disposés en parallèle par rapport à l'écoulement, la pompe (16) et les éléments filtrants du filtre (17) étant agencés de manière telle que la quantité de concentrat amenée à chaque élément filtrant par unité de temps s'élève entre 25 et 50 litres/minute et la quantité de perméat sortant de chaque élément filtrant par unité de temps est de 2,5 à 25 litres/minute.

6. Machine d'électro-érosion selon l'une des revendications 1 à 5, caractérisée en ce que la paroi de filtre (22) présente une dimension de pores de 0,01 à 2 µm, de préférence de 0,2 µm.

7. Machine d'électro-érosion selon l'une des revendications 1 à 6, caractérisée en ce que:
- il est prévu une cuve collectrice (3) dans laquelle est vidable le liquide de travail souillé de la cuve de travail (2) de la machine d'électro-érosion,
- une cuve de floculation (4) et/ou une cuve de sédimentation (5) sont prévues, dans lesquelles on peut amener au choix le contenu de la cuve collectrice (3),
- le concentrat soutiré de la cuve intermédiaire (6) par la pompe (16) est amené à travers le filtre (17) et recyclé vers la cuve intermédiaire,
- un réservoir (7) est prévu auquel est amené le perméat du filtre (17), et
- la cuve de travail (2) est alimentée avec le perméat du réservoir (7).

8. Machine d'électro-érosion selon la revendication 7, caractérisée en ce que la cuve de floculation (4) est disposée entre la cuve collectrice (3) et la cuve de sédimentation (5), un agent de sédimentation étant susceptible d'être ajouté au concentrat.

9. Machine d'électro-érosion selon l'une des revendications 1 à 8, caractérisée en ce que la paroi filtrante consiste en fibres creuses de polypropylène qui présentent un diamètre d'environ 1 à 2 mm et une grandeur de pores de 0,2 µm.

10. Machine d'électro-érosion selon l'une des revendications 1 à 9, caractérisée en ce que le filtre est agencé de manière telle qu'il soit lavable à contre-courant de manière périodique en fonction de la pression ou du débit, et est soumis à l'action pendant chaque phase de lavage à contrecourant, à des intervalles irréguliers de temps et de façon stochastique, à un mélange air-eau.

11. Machine d'électro-érosion selon la revendication 10, caractérisée en ce que des agents chimiques additionnels peuvent être mélangés pour le lavage à contre-courant au mélange air-eau.

12. Machine d'électro-érosion selon la revendication 10 ou 11, caractérisée en ce que la cuve intermédiaire (6) est vidable périodiquement dans un réservoir de décantation adapté à être vidé.
